# EUROPÄISCHE PATENTANMELDUNG

(11) **EP 4 451 159 A1**
(43) Veröffentlichungstag der Anmeldung: **23.10.2024**
(21) Anmeldenummer: 24163421.1
(22) Anmeldetag: 14.03.2024
(51) Int. Cl.: G06F 30/00, G06T 19/00

(54) **HYBRID-VERKEHRSSIMULATION MIT AGENTENMODELLEN ZUM TEST TELEOPERIERTER FAHRZEUGE**

(30) Priorität: 20.04.2023 DE 102023203633
(71) Anmelder: Stellantis Auto SAS, 78300 Poissy (FR)
(72) Erfinder: EBERLE, Ulrich, 65428 Rüsselsheim am Main (DE); FRANK, Sebastian, 65428 Rüsselsheim am Main (DE)
(74) Vertreter: Spitzfaden, Ralf

(57) **Zusammenfassung**

Die Erfindung betrifft eine Verkehrssimulation zum Testen eines teleoperierten Fahrzeugs, aufweisend die Schritte: Bereitstellen (S1) eines Datensatzes mit Informationen über ein reales Verkehrsszenario, Ausführen (S2) der Verkehrssimulation mit virtuellen Gegenstücken der realen Verkehrsteilnehmer und deren Bewegungsdaten mit Ausnahme eines zu ersetzenden Fahrzeugs als virtuelles teleoperiertes Testfahrzeug; Ermitteln (S3) einer Unähnlichkeitsmetrik zwischen den Bewegungsdaten aus dem Datensatz und den in der Simulation erhaltenen Bewegungsdaten des teleoperierten Testfahrzeugs, und wenn die Unähnlichkeitsmetrik größer als ein vorgegebener Grenzwert ist: Fortführen (S4) der Simulation unter Ersetzung realer Bewegungsdaten weiterer simulierter Verkehrsteilnehmer durch virtuelle Agentenmodelle; und Testen (S5) der zu testenden Fahrzeugkomponente, und gegebenenfalls Anpassen der Szenarienbibliothek.

## Beschreibung

Die Erfindung betrifft ein Verfahren zum Durchführen einer Verkehrssimulation zum Testen einer Fahrzeugkomponente eines teleoperierten Fahrzeugs.

Teleoperierte Fahrzeug-Anwendungen eignen sich insbesondere dafür, Fahrzeuge mit hohem Automatisierungsgrad durch schwierige Betriebsbereiche wie etwa beim Durchfahren von Baustellen, komplexen Autobahnkreuzen oder generell im urbanen Raum zu leiten. Teleoperiert heißt, dass Teile der Fahrzeugsteuerung und der Fahrer ("Tele-Operator") sich nicht mehr im betrachteten Fahrzeug befinden.

In der Entwicklung und Validierung von Fahrzeugen mit hohem Automatisierungsgrad werden besonders im Bezug auf kritische Betriebsbereiche simulationsbasierte Methoden genutzt. Vor dem Hintergrund der Gefährdung dritter Personen ist es nicht möglich, potentiell kritische Szenarien im öffentlichen Straßenverkehr zu testen. Gerade jedoch potenziell kritische Szenarien liefern diejenigen Daten, die bei der Entwicklung moderner Fahrzeuge mit hohem Automatisierungsgrad zu berücksichtigen sind, da gerade diese zu Unfällen führen. Durch z.B. szenarienbasiertes Entwickeln und Testen kann so schon durch Nutzung des digitalen Zwillings des automatisierten Fahrzeugs während früher Entwicklungsphasen eingeschätzt werden, wie sicher das spätere reale Fahrzeug im Einsatz in der offenen Welt (unter Umständen innerhalb eines beschränkten Betriebsbereichs) agieren wird.

Im Stand der Technik sind sogenannte "Adaptive-Replay-to-Sim" Verfahren bekannt. In solchen Verfahren werden reale Szenarien aufgenommenen und Informationen darüber für eine Simulation zur Verfügung gestellt, um somit an realistischen Daten angelehnt Tests von Fahrsteuerungssystemen (oder ihrer Sensoren) durchführen zu können. Der Vorteil der Überführung der Daten in eine Simulation ist die Möglichkeit der gefahrlosen virtuellen Testung, sowie die Möglichkeit der bewussten Veränderung der Daten aus der Realität.

Die DE 10 2019 206 908 B4 betrifft hierzu ein Verfahren zum Trainieren wenigstens eines Algorithmus für ein Steuergerät eines Kraftfahrzeugs, wobei das Steuergerät zur Umsetzung einer automatisierten bzw. autonomen Fahrfunktion unter Eingriff in Aggregate des Kraftfahrzeugs auf der Grundlage von Eingangsdaten unter Verwendung des wenigstens einen Algorithmus vorgesehen ist, wobei der Algorithmus durch ein selbstlernendes neuronales Netz trainiert wird, umfassend folgende Schritte: a) Bereitstellen eines Computerprogrammproduktmoduls für die automatisierte bzw. autonome Fahrfunktion, wobei das Computerprogrammproduktmodul den zu trainierenden Algorithmus und das selbstlernende neuronale Netz enthält, b) Einbetten des trainierten Computerprogrammproduktmoduls in das Steuergerät des Kraftfahrzeugs, c) Fahren des Kraftfahrzeugs in einer real existierenden Verkehrsumgebung durch einen menschlichen Fahrer, wobei die Fahrt eine gefahrene Trajektorie bestimmt, d) Zuführen von Daten einer Umgebungssensorik und einer Kraftfahrzeugsensorik zu dem Steuergerät und Berechnen einer virtuellen Trajektorie durch den Algorithmus, e) Ableiten einer Metrik aus einem Vergleich der gefahrenen Trajektorie und der virtuellen Trajektorie sowie Speichern der Daten der Umgebungssensorik und der Kraftfahrzeugsensorik in einem Speicher, wenn für eine Verkehrssituation bestimmte Metrikkriterien erfüllt sind, f) Zurverfügungstellen von Informationen betreffend die Verkehrssituation an eine Verkehrssimulation, g) Analyse der Verkehrssituation durch die Verkehrssimulation, wobei anhand der Kartendaten, der Umgebungssensorik und der Kraftfahrzeugsensorik ein virtuelles Abbild der Verkehrssituation erstellt wird, wobei mittels der Verkehrssimulation die Daten der Verkehrssituation variiert werden, und h) Trainieren des Algorithmus durch die Variation der Verkehrssituation. Die Verkehrssimulation wird als eine Simulation der Verkehrssituation aus der Perspektive der Verkehrsumgebung durchführt, wobei in der Verkehrssimulation Verhaltens- und Technologiemodelle für jeden einzelnen Verkehrsteilnehmer bereitgestellt werden, so dass eine zukünftige Verkehrssituation basierend auf einer Variation der bereitgestellten Verhaltens- und Technologiemodellen simuliert werden und wobei ferner auch zeitlich vergangene Umgebungs- und Kraftfahrzeugdaten in der Verkehrssimulation variiert werden.

Auch aus der Publikation "A Needle in a Haystack - How to Derive Relevant Scenarios for Testing Automated Driving Systems in Urban Areas" von Nico Weber, Dr.-Ing. Christoph Thiem und Prof. Dr.-Ing. Ulrich Konigorski des Preprints für "30th Aachen Colloquium Sustainable Mobility 2021" ist es bekannt, rigide Szenarien zur Verkehrssimulation zu verwenden und zu flexibilisieren. Darin wird basierend auf einem "Adaptive-Replay-to-Sim" Ansatz eine simulationsbasierte Toolchain für die Entwicklung und den Test von mit automatischen Fahrsteuerungssystemen ausgestatteten Fahrzeugen im urbanen Umfeld vorgestellt. Multimodale Interaktionen verschiedener Verkehrsteilnehmer werden hierbei betrachtet und u.a. für eine Rückspeisung in eine Szenario-Datenbank bereitgestellt.

Zum Testen und/oder Validieren von Fahrerassistenzsystemen für die Unterstützung einer manuellen Fahrzeugführung von Fahrzeugen wie Personenkraftwagen oder Lastkraftwagen, sowie von Automatisierungssystemen für hoch automatisierte bis hin zu autonomen Fahrzeugen (zusammengefasst unter "automatisierte Fahrsteuerfunktionen"; englisch: "Advanced Driver Assistance Systems" bzw. Systeme für "Autonomous Driving", zusammen abgekürzt ADAS/AD) ist zudem die Verwendung von Szenarienbibliotheken bekannt, die idealerweise Beschreibungen einer Vielzahl von (idealerweise möglichst stark) variierenden Szenarien aufweist, sodass ein Fahrzeug im späteren Regelbetrieb möglichst nicht auf prinzipiell ungetestete Situationen trifft. In solchen Szenarienbibliotheken werden typischerweise Szenarien-Beschreibungen in maschinenlesbarer und automatisiert ablegbarer Form gespeichert gehalten. Dazu werden zumeist Szenariobeschreibungssprachen verwendet, welche spezielle Dokumentations- und Programmsprachen verwenden. Ein Beispiel hierfür ist die etablierte Szenarienbeschreibungssprache des Vereins "ASAM e.V." mit dem Namen 'OpenSCENARIO^{®}' für die Nutzung in Szenarien-Bibliotheken. Es existieren darüber hinaus Szenarienbibliotheken mit Daten in maschinen-lesbaren Formaten, die jedoch auch menschlich verständlichen Kontext aufweisen, etwa "ADScene" und "SafetyPool".

Um mit Hilfe einer solchen Szenarienbibliothek das Verhalten eines Fahrsteuerungssystems oder seiner Sensoreinheit, oder den Betrieb eines teleoperierten Fahrzeugs in reaktiver Weise auf seine Umgebung (typischerweise genannt "vehicle under test"), untersuchen zu können, kann die Fahrt dieses ausgewählten betrachteten realen Verkehrsteilnehmers simuliert werden, während das Verhalten der anderen realen Verkehrsteilnehmer sowie die Umgebungsparameter der Szenarienbibliothek entnommen werden können und in diesem Fall auf realen Daten basieren.

Dadurch jedoch, dass die Daten über das Verhalten der anderen realen Verkehrsteilnehmer sowie über die Umgebungsparameter Tatsachen wiedergeben, die dadurch zustande gekommen sind, dass die übrigen Verkehrsteilnehmer ihre Reaktionen wiederum auf das Verhalten des betrachteten realen Verkehrsteilnehmers (der in der Simulation durch das "vehicle under test" als virtuelles Gegenstück ersetzt wird) anpassen, ist nur dann das in der Simulation eingespielte Verhalten der übrigen Verkehrsteilnehmer gemäß ihrer abgespeicherter Daten valide, wenn das ursprüngliche Verhalten des betrachteten realen Verkehrsteilnehmers und das seines virtuellen Gegenstücks in der Simulation (das simulierte "vehicle under test") im Wesentlichen gleich sind. Weist das simulierte Verhalten des Verkehrsteilnehmers als virtuelles "vehicle under test" zu sehr vom damaligen Verhalten des betrachteten realen Verkehrsteilnehmers ab, ist die Integrität des Realitätsgrades der Simulationsumgebung eingeschränkt, und in manchen Fällen somit ungeeignet, um das simulierte und damit virtuelle "vehicle under test" wie ein teleoperiertes Fahrzeugs in der Simulation zu testen.

Es ist daher Aufgabe der Erfindung, eine realitätsbasierte Simulationsumgebung zum Test eines teleoperierten Fahrzeugs bereitzustellen, die das Testen einer Fahrzeugkomponente des teleoperierten Fahrzeugs wie eines Teleoperator-Systems unter Behebung dieses Problems erlaubt, sodass keine unnötig hohe Rechenleistungen durch die vollständige Virtualisierung der Simulation mit all ihren Verkehrsteilnehmern benötigt werden.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Verfahren zum Durchführen einer Verkehrssimulation zum Testen einer Fahrzeugkomponente eines teleoperierten Fahrzeugs, aufweisend die Schritte:
- Bereitstellen eines Datensatzes mit Informationen über ein reales Verkehrsszenario aus einer Szenarienbibliothek, wobei der Datensatz Bewegungsdaten von realen Verkehrsteilnehmern im Verkehrsszenario umfasst, und wobei mindestens einer der realen Verkehrsteilnehmer ein Fahrzeug ist,
- Ausführen eines ersten Durchlaufs der Verkehrssimulation mit simulierten Gegenstücken der realen Verkehrsteilnehmer so, dass alle Bewegungsdaten der simulierten Verkehrsteilnehmer gleich den Bewegungsdaten der realen Verkehrsteilnehmer gemäß Datensatz sind mit Ausnahme der Bewegungsdaten eines zu ersetzenden Fahrzeugs aus den realen Verkehrsteilnehmern, das als virtuelles teleoperiertes Testfahrzeug in die Simulation eingebettet wird;
- Ermitteln einer Unähnlichkeitsmetrik zwischen den jeweiligen Bewegungsdaten des ersetzten Verkehrsteilnehmers aus dem Datensatz und den in der Simulation erhaltenen Bewegungsdaten des virtuellen teleoperierten Testfahrzeugs, und wenn die Unähnlichkeitsmetrik größer als ein vorgegebener Grenzwert ist:
- Fortführen der Simulation unter Ersetzung realer Bewegungsdaten weiterer simulierter Verkehrsteilnehmer durch virtuelle Agentenmodelle und Erzeugen synthetischer Sensorinformationen für die virtuellen Agentenmodelle und für das virtuelle teleoperierte Testfahrzeug, insbesondere für die zu testende Fahrzeugkomponente des virtuellen teleoperierten Testfahrzeugs; und
- Testen der zu testenden Fahrzeugkomponente, und gegebenenfalls Anpassen der Szenarienbibliothek mit den synthetischen Sensorinformationen der fortgeführten Simulation.

In einem Schritt des Verfahrens wird die zu testende Fahrzeugkomponente mittels der Ausführung der Verkehrssimulation getestet. Die zu testende Fahrzeugkomponente umfasst insbesondere ein System, das die Teleoperation des Fahrzeugs ermöglicht, was auch den Perzeptionskanal des teleoperierten Fahrzeugs umfassen kann, das heißt die sensorische Umfelderfassung. Optional können in einer Tele-Operations-Betriebszentrale zusätzliche externe Sensordaten über den Betriebsbereich und die Verkehrsumgebung zur Verfügung gestellt werden, z.B. durch die Kamera-Einrichtungen eines Parkhauses, einer Logistikfläche, oder einer anderen Art von Sensor-überwachtem Verkehrsraum an einer Autobahn oder im urbanen Umfeld. Die zu testende Fahrzeugkomponente wird entweder als physisches Gerät in der Verwendung in einer Hardware-in-the-Loop Methode in die Simulation integriert, oder virtuell abgebildet und ebenfalls simuliert. Es wird somit eine verbesserte Testung der zu testenden Fahrzeugkomponente gegenüber herkömmlichen Testverfahren erreicht.

Einer der ursprünglichen im realen Szenario (bevorzugt aus Vogelperspektive und/oder aus einer Ego-Perspektive) aufgezeichneten Verkehrsteilnehmer wird durch ein Modell des zu testenden teleoperierten Fahrzeugs ersetzt, das insbesondere von einem Telefahrer mit einer Mission durch die Simulation gefahren wird. Prinzipiell jeder beliebige Verkehrsteilnehmer aus dem Datensatz kann zum virtuellen teleoperierten Testfahrzeug erklärt werden, und in einem Closed-Loop-Test für die Tele-Operations-Betriebsumgebung sowie den Tele-Operator eingesetzt werden.

Die Bewegungsdaten aus gefahrenen Trajektorien des teleoperierten Testfahrzeuges und bevorzugt der anderen simulierten Verkehrsteilnehmer werden mit den entsprechenden Bewegungsdaten der aufgezeichneten Verkehrsteilnehmer verglichen. Aus diesem Vergleich erhaltene Abweichungen werden in einer Unähnlichkeitsmetrik quantifiziert.

Ist die besagte Unähnlichkeitsmetrik ermittelt, wird sie ihrem Wert nach mit einem Grenzwert verglichen. Wird der Grenzwert durch die Unähnlichkeitsmetrik überschritten, liegen bereits nicht vernachlässigbare Abweichungen zwischen den Trajektorien des mindestens einen virtuellen Testfahrzeugs und dem jeweilig zugehörigen realen Fahrzeug in der vorangegangenen Fahrt im realen Verkehrs-Szenario vor.

Größere Werte in der Unähnlichkeitsmetrik werden durch Abweichungen der Fahreigenschaften des virtuellen teleoperierten Testfahrzeugs von der ursprünglichen Bewegungsbahn oder Trajektorie des ursprünglichen realen Pendants hervorgerufen. Dies kann auch dann vorkommen, wenn sich ein Teleoperator des virtuellen teleoperierten Testfahrzeugs sehr unterschiedlich verhält. Bei zu großen Werten der Unähnlichkeitsmetrik wird in dem simulierten Gesamtszenario jedoch die Benutzung der realen Bewegungsdaten der weiteren simulierten Verkehrsteilnehmer für Testzwecke unbrauchbar, da die anderen Verkehrsteilnehmer nicht in ausreichender Weise adaptiv auf das virtuelle teleoperierte Testfahrzeug reagieren. Diese werden daher durch Agentenmodelle ersetzt, das heißt für sie werden in der Simulation von den ehemals realen Bewegungsdaten abweichende und auf das aktuelle Szenario der Simulation reagierende Bewegungsdaten zur Nachbildung des aktiv/reaktiv-Verhaltens eines realen Verkehrsteilnehmers erzeugt.

Solche Agentenmodelle sind dazu in der Lage, während der Simulation auf das Verhalten des virtuellen Testfahrzeugs aktiv zu reagieren, was bei der Verwendung der aufgezeichneten Bewegungsbahnen der realen Verkehrsteilnehmer nicht möglich ist, denn letztere werden statisch in der Simulation verwendet, und lediglich das virtuelle Testfahrzeug wäre dann in der Simulation in der Lage, Reaktionen auszuführen. Werden jedoch Agentenmodelle verwendet, liegt eine wechselseitige Reaktion zwischen dem virtuellen Testfahrzeug und den als Agentenmodellen ausgeführten weiteren Verkehrsteilnehmern vor.

Wie viele real erfassten Bewegungsbahnen der weiteren Verkehrsteilnehmer die Agentenmodelle in der Simulation ersetzen sollen, wird vorteilhaft demnach entschieden, wie nahe oder in welcher potenziell reaktiven Wirkung in der aktuellen Verkehrssituation die weiteren Verkehrsteilnehmer sich zum virtuellen teleoperierten Testfahrzeug befinden. Die einfachste Entscheidung hierzu ist es, sämtliche das virtuelle teleoperierte Testfahrzeug umgebenden Verkehrsteilnehmer in der Simulation durch Agentenmodelle zu ersetzen, dies geht jedoch zulasten der Rechenleistung, welche benötigt wird, um die Verkehrssimulation auszuführen.

Die agentenbasierten Trajektorien werden insbesondere genutzt, um neue synthetische Sensorinformationen für einen Perzeptionskanal des virtuellen teleoperierten Testfahrzeugs zu erhalten. Bevorzugt werden in Echtzeit erzeugte 3D-Grafikdaten verwendet, die insbesondere von einer 3D-Engine erzeugt werden und in den jeweiligen Perzeptionskanal, das heißt als Sensorinformationen, eingespeist werden.

Ob das Anpassen der Szenarienbibliothek erfolgt, ist insbesondere davon abhängig, ob die Unähnlichkeitsmetrik kleiner als der Grenzwert war oder nicht. Über die Überwachung des spezifischen teleoperierten Fahrzeugs, oder wenn mehrere teleoperierte Fahrzeuge betrachtet werden der Gesamtheit der teleoperierten Fahrzeugflotte, sowie der Überwachung der Verkehrsumgebung (mit unter anderem externen Kameras und/oder anderer Sensorik) ist dauerhaft ein aktueller Datensatz des betrieblichen Einsatzes des teleoperierten Fahrzeugs vorhanden. Dieser Datensatz kann benutzt werden, um mit Methoden des maschinelle Lernens Kataloge oder

Datenbanken von Szenarien aufzubauen, sowie die aufgetretenen Szenarien bezüglich der Teleoperation von Fahrzeugen zu klassifizieren, sowie statistische Verteilungen für das Verhalten der weiteren Verkehrsteilnehmer aufstellen zu können.

Es ist eine vorteilhafte Wirkung der Erfindung, dass X-in-the-Loop-Tests des teleoperierten Fahrzeugs realistischer und adaptiver werden, indem solange wie möglich originale Bewegungsbahnen und die damit konsistenten Sensorinformationen verwendet werden. Die agentenbasierte Simulation unterstützt wiederum vorteilhaft das simulationsbasierte Vorgehen mit seinen Vorteilen, dass der enorme Aufwand (personell/zeitlich/finanziell) zum Einfahren von Szenarien durch etwa Mitarbeiter eines Automobilherstellers für Tests durch das erfindungsgemäße Verfahren reduziert werden kann, wenn schon vorhandene Szenarien in der vorgeschlagenen Form flexibilisiert und nutzbar gemacht werden können. Es besteht daher auch keine Gefahr für Testfahrer oder andere Verkehrsbeteiligte. Einfache automatisierte Parameter-Variation und Testauswertung sind somit möglich: Es können die Wirkungen von Störungen durch unterschiedliche Software-Versions-Stände der Teleoperations-Umgebung, von Änderungen bei den Roundtrip-Signal-Latenz-Zeiten, sowie der Einfluss unterschiedlicher Teleoperatoren, und der von unabgestimmten anderen Verkehrsteilnehmern wie Autofahrern, Fußgängern und Fahrradfahrern untersucht werden. Das Verfahren kann genutzt werden, um neue Fahrzeuge in die Tele-Operations-Umgebung zu integrieren und zu testen, um neue Tele-Operations-Hardware beim selben Fahrzeug zu testen, oder um einen neuen Teleoperator in einer Simulation bzw. Hybrid-Reality-Umgebung testen/auszubilden. Optional kann auch getestet werden, inwiefern bestimmt Roundtrip-Latenz-Zeiten mit der Fahrzeug-Höchstgeschwindigkeit aus Sicherheitsgründen im Einklang für den Tele-Betrieb stehen. Zudem können Stresstests von Fahren (schwere Verkehrsbedingungen, hoher Verkehrsfluss) bzw. der Teleoperations- Betriebsumgebung inklusive Signalstrecke (etwa im Hinblick auf Roundtrip-Signal-Latenz-Zeiten) zum Fahrzeug durchgeführt werden.

Gemäß einer vorteilhaften Ausführungsform wird das virtuelle teleoperierte Testfahrzeug von einem Telefahrer mit einer vorgegebenen Mission durch ein simuliertes Szenario der Verkehrssimulation manuell gefahren.

Gemäß einer weiteren vorteilhaften Ausführungsform umfasst die Unähnlichkeitsmetrik eine geometrische Distanz zwischen einem Bahnverlauf aus den Bewegungsdaten und einem in der Simulation erhaltenen Bahnverlauf des virtuellen teleoperierten Testfahrzeugs.

Gemäß einer weiteren vorteilhaften Ausführungsform umfasst die Unähnlichkeitsmetrik zusätzlich Abweichungen zwischen den jeweiligen Bewegungsdaten aus dem Datensatz und den in der Simulation erhaltenen Bewegungsdaten weiterer Verkehrsteilnehmer.

Gemäß einer weiteren vorteilhaften Ausführungsform umfasst der Datensatz Bewegungsdaten der realen Verkehrsteilnehmer im Verkehrsszenario und Umgebungsdaten jeweils aus einer Vogelperspektive und aus einer Ego-Perspektive.

Gemäß einer weiteren vorteilhaften Ausführungsform umfassen die synthetischen Sensorinformationen für die zu testende Fahrzeugkomponente jeweils Daten aus einer Ego-Perspektive.

Gemäß einer weiteren vorteilhaften Ausführungsform umfassen die synthetischen Sensorinformationen für die Fahrzeugkomponente optische Daten für eine von der Fahrzeugkomponente ausgeführte Bilderkennung, insbesondere synthetische Echtzeit-Grafikdaten, die von einer 3D-Engine erzeugt werden.

Gemäß einer weiteren vorteilhaften Ausführungsform weisen die Umgebungsdaten Positionen und/oder Eigenschaften und/oder Zustände von Objekten in der virtuellen Umgebung auf.

Gemäß einer weiteren vorteilhaften Ausführungsform erfolgt ein Augmentieren der von der Simulation für das virtuelle teleoperierte Testfahrzeug bereitgestellten und auf realen Sensordaten basierenden Sensorinformationen bereits, wenn die Unähnlichkeitsmetrik kleiner als der vorgegebene Grenzwert ist, aber größer als ein vorgegebener Schwellwert ist, der kleiner als der vorgegebene Grenzwert ist.

Das Augmentieren von Sensorinformationen der Verkehrssimulation dient zur Anpassung der in der Realität erfassten Sensorinformationen in der Simulation dahingehend, dass das virtuelle teleoperierte Testfahrzeug zu seiner eigenen Abweichung in seinen Bewegungsbahnen konsistente Umgebungsinformationen einschließlich Informationen über die weiteren Verkehrsteilnehmer erhält. Die augmentierten Sensorinformationen basieren dabei im Gegensatz zu den vollsynthetischen Sensorinformationen auf den realen Sensorinformationen, wie sie vom realen Fahrzeug (welches später in der Simulation durch das virtuelle teleoperierte Testfahrzeug ersetzt wird) im realen vergangenen Verkehrs-Szenario erfasst wurden. Diese werden lediglich modifiziert, nicht jedoch durch vollständig synthetische Sensorinformationen ersetzt.

Gemäß einer weiteren vorteilhaften Ausführungsform umfasst die zu testende Fahrzeugkomponente des virtuellen teleoperierten Testfahrzeugs eine Datentransfereinheit, wobei Roundtrip-Latenz-Zeiten der Signalübertragung zum Erfassen von Sensorinformationen berücksichtigt werden.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigt:

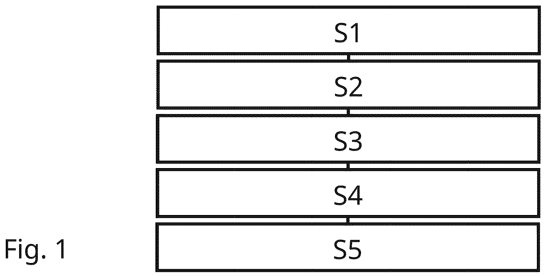

- Fig. 1:: Ein Verfahren gemäß einem Ausführungsbeispiel der Erfindung.

Fig. 1 zeigt ein computerimplementiertes Verfahren zum Durchführen einer Verkehrssimulation. Vor der Durchführung des Verfahrens wird ein reales Verkehrsszenario beobachtet. Im Verkehrsszenario treten mehrere Verkehrsteilnehmer in einem begrenzten Bereich auf und je nach Abstand zueinander interagieren zumindest manche davon durch ein Aktion-Reaktion-Verhalten. Das Verkehrsszenario wird im vorliegenden Beispiel aus der Vogelperspektive durch ein unbemanntes Luftfahrzeug oder mit entsprechenden Kamerasystemen an Masten oder hohen Gebäuden erfasst. Ferner besteht Zugriff auf Sensorinformationen, welche aus der Ego-Perspektive zumindest eines Fahrzeugs im Verkehrsszenario aufgezeichnet wurden. Sämtliche so erhaltenen Aufzeichnungen werden in einer Szenarienbibliothek abgelegt. In einem ersten Schritt des Verfahrens erfolgt das Bereitstellen S1 eines Datensatzes mit Informationen über dieses reale Verkehrsszenario aus der Szenarienbibliothek. Im Datensatz umfasst sind Bewegungsdaten der realen Verkehrsteilnehmer im beobachteten Verkehrsszenario. Im Verfahren erfolgt ferner das Ausführen S2 eines ersten Durchlaufs der Verkehrssimulation mit virtuellen Gegenstücken der realen Verkehrsteilnehmer so, dass alle Bewegungsdaten der simulierten Verkehrsteilnehmer gleich den Bewegungsdaten der realen Verkehrsteilnehmer gemäß Datensatz entsprechen - jedoch mit Ausnahme der Bewegungsdaten eines zu ersetzenden Fahrzeugs aus den realen Verkehrsteilnehmern, das als virtuelles teleoperiertes Testfahrzeug in die Simulation eingebettet wird. Dieser ausgewählte Verkehrsteilnehmer wird mit seiner in der Realität zuvor beobachteten Bewegungsbahn durch ein virtuelles teleoperiertes Testfahrzeug ersetzt, welches von einem Telefahrer mit einer vorgegebenen Mission durch ein simuliertes Szenario der Verkehrssimulation manuell gefahren wird. Es folgt das Ermitteln S3 einer Unähnlichkeitsmetrik zwischen den jeweiligen Bewegungsdaten aus dem Datensatz des ersetzten Verkehrsteilnehmers und den in der Simulation erhaltenen und durch die manuelle Fahrzeugführung des Fahrers auf seiner Mission verursachten Bewegungsdaten des virtuellen teleoperierten Testfahrzeugs. Stellt sich bei einem Vergleich mit einem Grenzwert heraus, dass ein Wert der Unähnlichkeitsmetrik größer als ein vorgegebener Grenzwert ist, erfolgt die Fortführung S4 der Simulation unter Ersetzung realer Bewegungsdaten weiterer simulierter Verkehrsteilnehmer durch virtuelle Agentenmodelle und das Erzeugen synthetischer Sensorinformationen für die virtuellen Agentenmodelle und für das virtuelle teleoperierte Testfahrzeug, insbesondere für die zu testende Fahrzeugkomponente des virtuellen teleoperierten Testfahrzeugs; das Testen S5 der zu testenden Fahrzeugkomponente erfolgt während dieser Simulation, wobei dann eine Anpassung der ursprünglichen Szenarienbibliothek für weitere Simulationen in der Zukunft erfolgt, wenn durch den Einsatz von Agentenmodellen synthetische Sensorinformationen erzeugt wurden. Verhaltensmodelle der weiteren Verkehrsteilnehmer können somit ebenfalls aktualisiert werden. Das Verhalten des teleoperierenden Testfahrers kann somit in der Simulation zu seiner Ausbildung analysiert werden, jedoch auch eine Telemetrieeinheit des Fahrzeugs zum Zwecke der Ausführung der Teleoperation des Fahrzeugs auf Latenzen, Signalverarbeitung, Wiedergabe der Daten der Umfeldsensorik und weiteres geprüft werden.

Obwohl die Erfindung im Detail durch bevorzugte Ausführungsbeispiele näher illustriert und erläutert wurde, ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

### Bezugszeichenliste

- S1: Bereitstellen
- S2: Ausführen
- S3: Ermitteln
- S4: Fortführen
- S5: Testen

## Patentansprüche

1. Verfahren zum Durchführen einer Verkehrssimulation zum Testen einer Fahrzeugkomponente eines teleoperierten Fahrzeugs, aufweisend die Schritte:
- Bereitstellen (S1) eines Datensatzes mit Informationen über ein reales Verkehrsszenario aus einer Szenarienbibliothek, wobei der Datensatz Bewegungsdaten von realen Verkehrsteilnehmern im Verkehrsszenario umfasst, und wobei mindestens einer der realen Verkehrsteilnehmer ein Fahrzeug ist,
- Ausführen (S2) eines ersten Durchlaufs der Verkehrssimulation mit simulierten Gegenstücken der realen Verkehrsteilnehmer so, dass alle Bewegungsdaten der simulierten Verkehrsteilnehmer gleich den Bewegungsdaten der realen Verkehrsteilnehmer gemäß Datensatz sind mit Ausnahme der Bewegungsdaten eines zu ersetzenden Fahrzeugs aus den realen Verkehrsteilnehmern, das als virtuelles teleoperiertes Testfahrzeug in die Simulation eingebettet wird;
- Ermitteln (S3) einer Unähnlichkeitsmetrik zwischen den jeweiligen Bewegungsdaten des ersetzten Verkehrsteilnehmers aus dem Datensatz und den in der Simulation erhaltenen Bewegungsdaten des virtuellen teleoperierten Testfahrzeugs, und wenn die Unähnlichkeitsmetrik größer als ein vorgegebener Grenzwert ist:
- Fortführen (S4) der Simulation unter Ersetzung realer Bewegungsdaten weiterer simulierter Verkehrsteilnehmer durch virtuelle Agentenmodelle und Erzeugen synthetischer Sensorinformationen für die virtuellen Agentenmodelle und für das virtuelle teleoperierte Testfahrzeug, insbesondere für die zu testende Fahrzeugkomponente des virtuellen teleoperierten Testfahrzeugs; und
- Testen (S5) der zu testenden Fahrzeugkomponente, und gegebenenfalls Anpassen der Szenarienbibliothek mit den synthetischen Sensorinformationen der fortgeführten Simulation.

2. Verfahren nach Anspruch 1,
wobei das virtuelle teleoperierte Testfahrzeug von einem Telefahrer mit einer vorgegebenen Mission durch ein simuliertes Szenario der Verkehrssimulation manuell gefahren wird.

3. Verfahren nach einem der vorhergehenden Ansprüche,
wobei die Unähnlichkeitsmetrik eine geometrische Distanz zwischen einem Bahnverlauf aus den Bewegungsdaten und einem in der Simulation erhaltenen Bahnverlauf des virtuellen teleoperierten Testfahrzeugs umfasst.

4. Verfahren nach einem der vorhergehenden Ansprüche,
wobei die Unähnlichkeitsmetrik zusätzlich Abweichungen zwischen den jeweiligen Bewegungsdaten aus dem Datensatz und den in der Simulation erhaltenen Bewegungsdaten weiterer Verkehrsteilnehmer umfasst.

5. Verfahren nach einem der vorhergehenden Ansprüche,
wobei der Datensatz Bewegungsdaten der realen Verkehrsteilnehmer im Verkehrsszenario und Umgebungsdaten jeweils aus einer Vogelperspektive und aus einer Ego-Perspektive umfasst.

6. Verfahren nach einem der vorhergehenden Ansprüche,
wobei die synthetischen Sensorinformationen für die zu testende Fahrzeugkomponente jeweils Daten aus einer Ego-Perspektive umfassen.

7. Verfahren nach Anspruch 6,
wobei die synthetischen Sensorinformationen für die Fahrzeugkomponente optische Daten für eine von der Fahrzeugkomponente ausgeführte Bilderkennung umfassen, insbesondere synthetische Echtzeit-Grafikdaten, die von einer 3D-Engine erzeugt werden.

8. Verfahren nach Anspruch 5,
wobei die Umgebungsdaten Positionen und/oder Eigenschaften und/oder Zustände von Objekten in der virtuellen Umgebung aufweisen.

9. Verfahren nach einem der vorhergehenden Ansprüche,
wobei ein Augmentieren der von der Simulation für das virtuelle teleoperierte Testfahrzeug bereitgestellten und auf realen Sensordaten basierenden Sensorinformationen bereits erfolgt, wenn die Unähnlichkeitsmetrik kleiner als der vorgegebene Grenzwert ist, aber größer als ein vorgegebener Schwellwert ist, der kleiner als der vorgegebene Grenzwert ist.

10. Verfahren nach einem der vorhergehenden Ansprüche,
wobei die zu testende Fahrzeugkomponente des virtuellen teleoperierten Testfahrzeugs eine Datentransfereinheit umfasst, wobei durch die Datentransfereinheit mitverursachte Roundtrip-Latenz-Zeiten der Signalübertragung zum Erfassen von Sensorinformationen berücksichtigt werden.
